# DEMANDE DE BREVET EUROPEEN

(11) **EP 1 209 590 A2**
(43) Date de publication de la demande: **29.05.2002**
(21) Numéro de dépôt: 01460072.0
(22) Date de dépôt: 22.11.2001
(51) Int. Cl.: G06F 17/30

(54) **Accès à des services mobiles géodépendants d'un réseau de télécommunication**

(30) Priorité: 22.11.2000 FR 0015109
(71) Demandeur: Cegetel Groupe, 92915 Paris La Défense (FR)
(72) Inventeur: Bouthors, Nicolas, 38240 Meylan (FR); Caloud, Philippe, 38330 Saint-Ismier (FR)
(74) Mandataire: Vidon, Patrice

(57) **Abrégé**

L'invention concerne un serveur (1) d'accès à des services, du type permettant l'interconnexion entre une pluralité de terminaux (2, 3, 4) et une pluralité de sites fournisseurs de contenu (7, 8), via un réseau de télécommunication.

Selon l'invention, un tel serveur d'accès met à la disposition desdits sites fournisseurs des moyens de ressources complémentaires (9, 10, 11, 12, 13) délivrant, sur commande d'un desdits sites fournisseurs, des informations permettant de construire une réponse à une requête d'un desdits terminaux.

## Description

Le domaine de l'invention est celui de la gestion des accès par un terminal de client, tel notamment un radio-téléphone, un terminal mobile ou un micro-ordinateur, aux services d'un réseau de télécommunication.

Plus précisément, l'invention concerne l'accès à des services géo-dépendants d'un réseau de télécommunication.

Le réseau de télécommunication peut notamment, mais non exclusivement, être un réseau de type internet, tel que le réseau mondial Internet.

En outre, la présente invention s'applique non seulement lorsque le terminal accède directement au réseau de télécommunication, mais aussi lorsqu'il y accède par l'intermédiaire d'au moins un autre réseau de communication, auquel il est abonné. Cet autre réseau de communication est par exemple le réseau téléphonique commuté ("réseau fixe") et/ou un réseau de radiocommunication ("réseau mobile").

Un tel réseau de radiocommunication utilise par exemple la norme GSM (en anglais "Global System for Mobile communications"), la norme DCS 1800 (en anglais "Digital Cellular System" à 1800 MHz), la norme UMTS (en anglais "Universal Mobile Telecommunication System") ou tout autre norme de radiocommunication adaptée.

Afin de montrer les inconvénients de l'art antérieur en termes d'accès aux services d'un réseau de communication, et notamment aux services mobiles géo-dépendants, on rappelle maintenant les principes de la technique actuelle de fourniture d'un tel service par un fournisseur de contenu du réseau mondial Internet, en réponse à une requête d'un terminal de client.

Il est clair que les inconvénients qui vont être décrits à travers cet exemple illustratif s'appliquent également aux autres techniques connues de fourniture d'un service d'un réseau de communication à un terminal de client.

Le client accède, à l'aide d'un terminal adapté, qui peut être un téléphone mobile ou un ordinateur par exemple, à un réseau de télécommunication interconnecté au réseau mondial Internet. Via son terminal, il fait une demande de connexion au réseau Internet auprès de son fournisseur d'accès, qui se charge alors d'assurer une communication entre le terminal du client et le réseau Internet. Après que cette communication est établie, le client peut accéder à différentes pages Web, et notamment à différents sites de fournisseurs de contenu.

Par exemple, le client peut accéder à un site répertoriant les adresses de différentes administrations publiques. Il peut alors émettre une requête à destination du fournisseur de contenu propriétaire de ce site, relative à l'adresse de l'hôtel de ville de sa localité. Le fournisseur de contenu envoie en réponse l'adresse au client. S'il souhaite enrichir le contenu renvoyé au client en y insérant un itinéraire détaillé, ou une carte géographique dynamique indiquant au client la route à suivre pour se rendre à l'hôtel de ville, le fournisseur de contenu doit développer lui-même ces serveurs de routage ou de création dynamique de cartes géographiques sur son site. Le fournisseur de contenu peut également se connecter à des serveurs distants lui fournissant des informations permettant d'enrichir un contenu envoyé au client. Il doit alors intégrer lui-même à son contenu le résultat des requêtes émises à destination de ces serveurs distants.

Un inconvénient de cette technique de l'art antérieur est donc qu'elle est coûteuse en termes de développement pour les fournisseurs de contenu offrant des services, notamment des services géo-dépendants.

Un autre inconvénient de cette technique de l'art antérieur est que la réponse envoyée au client est de qualité médiocre, en raison de l'impossibilité pour le fournisseur de contenu de développer un grand nombre de serveurs complémentaires qui lui permettraient d'enrichir le contenu envoyé au client.

Un autre inconvénient de cette technique de l'art antérieur est que le développement par le fournisseur de contenu de serveurs complémentaires, ou l'intégration de résultats de requêtes à des serveurs complémentaires distants, lui permettant d'enrichir la réponse envoyée au client accroît la complexité du site du fournisseur de contenu.

On connaît par ailleurs des solutions spécifiques permettant la fourniture d'un service géo-dépendant, telles que par exemple celles qui sont proposées par les systèmes de guidage automobile, qui permettent à des équipements spécifiques embarqués de guider un conducteur, en réponse à une requête.

Un inconvénient de ces solutions de l'art antérieur est que de tels services ne sont accessibles qu'aux clients disposant d'un équipement spécifique embarqué dans leur véhicule, et ne sont pas accessibles par une pluralité de terminaux de communication.

Un autre inconvénient de ces techniques de l'art antérieur est qu'elles ne permettent l'accès qu'à un nombre limité de services, de portée restreinte au seul guidage automobile dans l'exemple illustratif ci-dessus.

Ces techniques de l'art antérieur ont encore pour inconvénient de présenter une structure fermée, et de ne pas pouvoir intégrer, dans le contenu fourni au client, des informations extérieures, proposées par exemple par d'autres serveurs ou d'autres ensembles technologiques.

L'invention a notamment pour objectif de pallier ces inconvénients de l'art antérieur.

Plus précisément, un objectif de l'invention est de permettre à un utilisateur d'un réseau de télécommunication de recevoir d'un fournisseur de contenu une réponse à valeur ajoutée, ou enrichie, par rapport à l'information brute produite par le fournisseur de contenu consulté.

L'invention a également pour objectif, selon un aspect de l'invention, de fournir une technique d'accès à des services d'un réseau de télécommunication, permettant à un utilisateur de recevoir d'un fournisseur de contenu, une information à valeur ajoutée tenant compte, de manière dynamique, d'une position géographique.

Un autre objectif de l'invention est de fournir une technique d'accès à des services d'un réseau de télécommunication, permettant à des fournisseurs de contenu de pouvoir accéder, de manière ouverte et standardisée, à des ressources complémentaires génériques proposées par un tiers, et par exemple un opérateur de réseau.

L'invention a encore pour objectif de mettre en oeuvre une technique d'accès à des services d'un réseau de télécommunication permettant de réaliser une médiation de services.

L'invention a également pour objectif de fournir une technique d'accès à des services d'un réseau de télécommunication qui soit simple et peu coûteuse à mettre en oeuvre, et notamment qui ne nécessite pas de développements coûteux pour les fournisseurs de contenu.

Encore un autre objectif de l'invention est de mettre en oeuvre une technique d'accès à des services d'un réseau de télécommunication permettant à un utilisateur de recevoir d'un fournisseur de contenu une information enrichie de manière transparente pour un tel utilisateur.

L'invention a également pour objectif de fournir une technique d'accès à des services d'un réseau de radiocommunication permettant à un fournisseur de contenu une mise en forme optimale de la réponse émise à destination d'un terminal de client.

L'invention a aussi pour objectif de mettre en oeuvre une technique d'accès à des services d'un réseau de radiocommunication permettant de fournir à un utilisateur un format adapté au type de terminal dont il dispose.

L'invention a encore pour objectif de fournir une technique d'accès à des services d'un réseau de télécommunication pouvant évoluer d'un point de vue technologique de façon transparente pour les fournisseurs de contenu et pour les utilisateurs du réseau de télécommunication considéré.

Ces objectifs, ainsi que d'autres qui apparaîtront par la suite, sont atteints, à l'aide d'un serveur d'accès à des services, du type permettant l'interconnexion entre une pluralité de terminaux et une pluralité de sites fournisseurs de contenu, via un réseau de télécommunication.

Selon l'invention, un tel serveur d'accès met à la disposition desdits sites fournisseurs des moyens de ressources complémentaires délivrant, sur commande d'un desdits sites fournisseurs, des informations permettant de construire une réponse enrichie à une requête d'un desdits terminaux.

Un tel serveur d'accès permet donc aux sites fournisseurs d'accéder à des ressources pouvant être, par exemple, supportées par des serveurs connectés au même réseau local que le serveur d'accès de l'invention, ou des ressources externes disponibles, de manière générale, sur le réseau de télécommunication considéré.

Ainsi, l'invention repose sur une approche tout à fait nouvelle et inventive de la fourniture de services à un client connecté à un réseau de télécommunication. En effet, l'invention permet notamment de fournir, à un utilisateur d'un réseau de télécommunication, une information enrichie par rapport au contenu brut produit, selon les techniques de l'art antérieur, par un fournisseur de contenu, auquel a été adressée la requête de l'utilisateur.

L'invention permet également à un fournisseur de contenu de sous-traiter à l'opérateur du réseau de télécommunication la gestion de certaines ressources mises en oeuvre pour construire une réponse à une requête d'un utilisateur, de manière à se décharger de la gestion de certaines applications, et donc à pouvoir proposer un service de qualité accrue aux utilisateurs du réseau de télécommunication.

L'invention repose encore sur une approche nouvelle de mise en commun de ressources, proposées par l'opérateur du réseau de télécommunication à une pluralité de sites fournisseurs de contenu.

Selon une caractéristique avantageuse de l'invention, au moins un desdits moyens de ressources complémentaires est conçu de façon à délivrer des informations tenant compte de la position géographique dudit terminal ayant émis une requête et/ou d'une position géographique indiquée par ledit terminal.

Un fournisseur de contenu peut ainsi fournir, en réponse à une requête d'un client, un contenu enrichi à l'aide d'un service géo-dépendant. Par exemple, un fournisseur de contenu peut transmettre à un utilisateur la liste des restaurants les plus proches de sa position géographique courante, ou d'une position géographique désignée par cet utilisateur.

Selon une première variante avantageuse de l'invention, un tel serveur d'accès comprend des moyens d'intégration desdites informations à un contenu fourni par ledit site fournisseur, de manière à construire ladite réponse.

De cette façon, l'intégration des informations délivrées par les serveurs de ressources complémentaires au contenu fourni par le fournisseur de contenu se fait de manière transparente pour ce dernier : la construction de la réponse envoyée au client est effectuée par le serveur d'accès, et le fournisseur de contenu n'a pas besoin de mettre en oeuvre des moyens spécifiques permettant d'enrichir le contenu qu'il produit.

Selon une deuxième variante avantageuse de l'invention, lesdites informations sont envoyées audit site fournisseur ayant formulé une commande, ledit site fournisseur intégrant au moins certaines desdites informations à un contenu qu'il produit, de manière à construire ladite réponse.

Avantageusement, un tel serveur d'accès comprend un moteur d'interprétation desdites commandes, permettant d'identifier lesdites commandes au sein d'un contenu fourni par un desdits sites fournisseurs audit serveur et/ou de traduire lesdites commandes en requêtes destinées à au moins l'un desdits moyens de ressources complémentaires.

Les commandes insérées au sein du contenu permettent en effet au fournisseur de contenu de garder un contrôle fin sur la mise en forme finale de la réponse envoyée au client. À la réception d'un contenu, le serveur d'accès identifie ainsi les commandes qui y sont insérées, et les transmet par exemple à un serveur de ressource complémentaire adéquat, en fonction des informations nécessaires à l'enrichissement du contenu reçu.

Selon une caractéristique avantageuse de l'invention, ledit contenu est exprimé selon au moins un langage de description avec marqueurs.

Préférentiellement, ledit langage de description avec marqueurs appartient au groupe comprenant :
- un langage de type XML (en anglais "Extended Markup Language") ;
- un langage de type HTML (en anglais "HyperText Markup Language") ;
- un langage de type WML (en anglais "Wireless Markup Language") ;
- un langage de type XHTML (en anglais "eXtensible Hyper Text Markup Language").

De manière préférentielle, lesdites commandes sont exprimées selon un langage appartenant au groupe comprenant :
- un langage de type HTML ;
- un langage de type WML ;
- un langage de type XHTML ;
- un langage interprétable, par exemple de type Java (marque déposée).

Selon une technique avantageuse de l'invention, un tel serveur d'accès comprend un moteur de mise en forme d'un contenu, fourni par ledit site fournisseur, de manière à pouvoir formuler ladite réponse sous un format final, fonction du type dudit terminal ayant émis ladite requête.

Le fournisseur de contenu peut ainsi bénéficier d'une adaptation de son contenu à tout type de terminal. En effet, le serveur d'accès peut, grâce au moteur de mise en forme de contenu, délivrer une réponse dont la mise en forme est différente, selon qu'elle s'adresse à un client disposant d'un téléphone mobile, d'un PDA (en anglais "Personal Digital Assistant"), d'un ordinateur portable, etc...

Avantageusement, un tel serveur d'accès comprend des moyens de traduction d'adresse réticulaire (en anglais URL, "Uniform Resource Locator"), permettant de traduire au moins un lien présent dans un contenu fourni par ledit site fournisseur en un lien local audit serveur d'accès, de manière à ce qu'une requête ultérieure dudit terminal à ladite adresse réticulaire passe par ledit serveur d'accès.

Tous les liens inclus dans le contenu d'origine sont ainsi traduits en des liens locaux au serveur d'accès, ce qui assure que toute navigation ultérieure du client passe par le serveur d'accès, pour revenir au site d'origine.

Préférentiellement, un tel serveur d'accès comprend des moyens de gestion de session.

Selon une caractéristique avantageuse de l'invention, l'un au moins desdits moyens de ressources complémentaires appartient au groupe comprenant :
- un serveur de localisation, permettant de déterminer la position géographique dudit terminal ayant émis ladite requête ;
- un serveur de création dynamique de cartes géographiques, permettant d'associer des marqueurs liés à un contenu fourni par ledit site fournisseur audit terminal à leur position sur ladite carte créée ;
- un serveur de gestion de calendriers ;
- un serveur de routage dynamique ;
- un serveur de géocodage ;
- un serveur de fourniture d'annuaire ;
- un serveur de contrôle de services de téléphonie ;
- un moteur de recherche ;
- un serveur de publicité localisée.

Ainsi, par exemple, un serveur de gestion de calendrier permet de gérer, au niveau du serveur d'accès, un calendrier associant les dimensions temporelle et géographique, de manière à permettre à un client de lier des événements, tels que des rendez-vous prévus, à une position géographique. Un tel serveur peut ainsi être utilisé comme un fournisseur d'informations de localisation, en fonction du temps, et peut être un complément utile des techniques de localisation de type GSM (Groupe Spécial Mobiles).

Les moyens de ressources complémentaires peuvent également comprendre un serveur de publicité localisée, permettant au fournisseur de contenu d'insérer dans son contenu des publicités ciblées en fonction de la localisation de l'utilisateur.

Le fournisseur de contenu peut encore émettre des commandes destinées à un serveur de contrôle de services de téléphonie. La mise en oeuvre d'un tel serveur permet par exemple d'inclure dans le contenu des numéros de téléphone, rendus actifs par une commande, permettant, lorsqu'il sont sélectionnés au niveau du terminal du client, de faire un appel direct au numéro. Un tel serveur permet encore de réaliser une redirection d'appels, par exemple en mettant en oeuvre une reprogrammation automatique de numéros de renvoi d'appels en cas de ligne occupée, ou de terminal éteint, en fonction de la localisation du terminal du client. Un tel serveur peut également permettre un filtrage d'appels téléphoniques, en fonction de la localisation du client, par exemple selon qu'il se trouve à son domicile ou sur son lieu de travail.

Avantageusement, un tel serveur d'accès appartient au groupe comprenant les portails et les proxys.

L'invention concerne également un site fournisseur de contenu auquel une pluralité de terminaux peut accéder par l'intermédiaire d'un serveur d'accès à des services, via un réseau de télécommunication.

Selon l'invention, un tel site fournisseur de contenu comprend des moyens d'émission d'au moins une commande à destination dudit serveur d'accès à des services, de manière que ledit portail mette à la disposition dudit site fournisseur des moyens de ressources complémentaires délivrant des informations permettant de construire une réponse à une requête d'un desdits terminaux.

Un tel fournisseur de contenu peut ainsi fournir à un client un contenu enrichi, sans avoir à développer des moyens complexes de ressources complémentaires ou d'intégration d'informations d'enrichissement à son contenu, de telles opérations étant effectuées par un serveur d'accès distant.

Avantageusement, un tel site fournisseur de contenu comprend des moyens d'intégration desdites informations délivrées par lesdits moyens de ressources complémentaires à un contenu qu'il produit, de manière à construire ladite réponse.
L'invention concerne encore un procédé de fourniture d'un service par un site prédéterminé d'une pluralité de sites fournisseurs de contenu, en réponse à une requête d'un terminal prédéterminé d'une pluralité de terminaux, un serveur d'accès à des services permettant l'interconnexion entre ladite pluralité de sites fournisseurs de contenu et ladite pluralité de terminaux, via un réseau de télécommunication.

Selon l'invention, un tel procédé comprend une étape au cours de laquelle ledit serveur met à la disposition dudit site fournisseur des moyens de ressources complémentaires délivrant, sur commande dudit site fournisseur, des informations permettant de construire une réponse à une requête d'un desdits terminaux.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique d'un système de télécommunication regroupant des terminaux, des fournisseurs de contenus, des moyens de ressources complémentaires et un serveur d'accès à des services selon l'invention ;
- les figures 2 à 4 illustrent un exemple de mise en oeuvre du système de la figure 1 en réponse à une requête d'un terminal, destinée à un site fournisseur de contenu ;
- la figure 5, décomposée sur les planches de dessins ci-jointes en figures 5a et 5b, décrit un exemple d'échanges entre le serveur d'accès selon l'invention, un fournisseur de contenu, et un serveur complémentaire de localisation.

Le principe général de l'invention repose sur la mise à disposition, pour des fournisseurs de contenu, de serveurs de ressources complémentaires accessibles par une infrastructure de portail et/ou de "proxy" (en français, mandataire) adaptée.

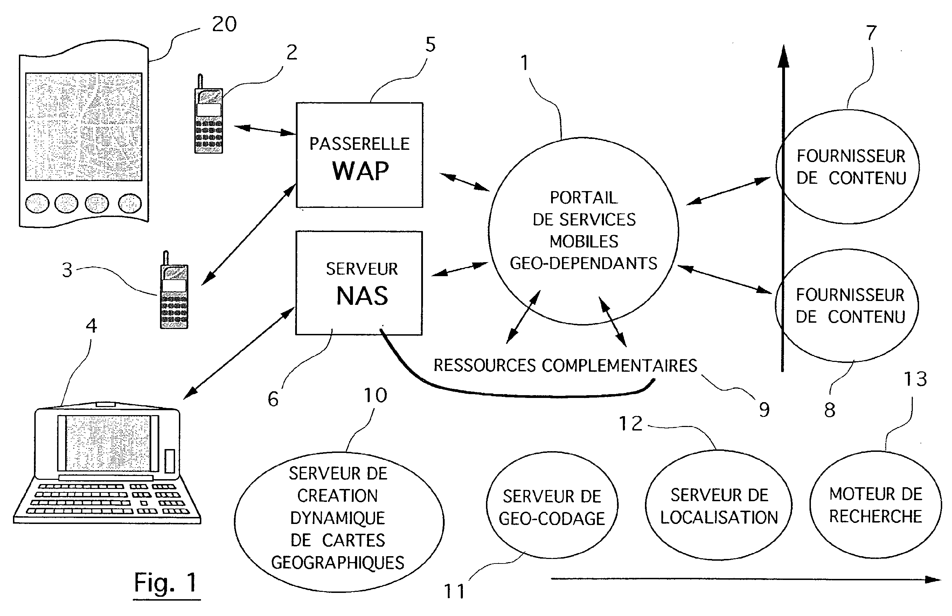

On présente, en relation avec la figure 1, un mode de réalisation d'un système de télécommunication regroupant une pluralité de terminaux, une pluralité de fournisseurs de contenus, des moyens de ressources complémentaires et un serveur d'accès selon l'invention. On s'attache plus particulièrement à décrire un mode de réalisation de l'invention dans lequel le réseau de télécommunication considéré est le réseau mondial Internet.

Selon le mode de réalisation décrit en figure 1, le serveur d'accès selon l'invention est représenté sous la forme d'un portail 1 de services mobiles géo-dépendants. Un tel serveur peut également, selon un autre mode de réalisation, avoir une structure de "proxy", ou toute autre structure de serveur adaptée à la mise en oeuvre de l'invention.

Un utilisateur accède, à l'aide d'un terminal 2, 3, 4 ou 20, à un réseau de télécommunication interconnecté au réseau Internet. Par exemple, un utilisateur accède au réseau Internet à l'aide de son téléphone de radiocommunication mobile 2, 3, par l'intermédiaire d'une passerelle WAP 5 (en anglais "Wireless Application Protocol", protocole d'applications de la radiotéléphonie), qui réalise l'interconnexion entre le réseau Internet et le réseau de radiocommunication auquel est connecté le terminal 2 ou 3.

Un utilisateur peut aussi accéder au réseau Internet à l'aide d'un PDA 20 (en anglais "Personal Digital Assistant", assistant numérique personnel).

Un utilisateur peut encore accéder au réseau Internet à l'aide de son ordinateur portable 4, par l'intermédiaire d'un serveur NAS 6 (en anglais "Network Access Server"), ou à partir de tout autre terminal pouvant accéder directement ou indirectement au réseau mondial Internet selon le mode de réalisation illustré en figure 1.

L'utilisateur émet alors une requête à destination d'un site fournisseur de contenu 7 ou 8. En réponse à cette requête, le fournisseur de contenu 7 ou 8 envoie au portail 1 un contenu, dans lequel sont insérées une ou plusieurs commandes d'informations complémentaires, par exemple exprimées selon un langage de type XML (en anglais "eXtensible Markup Language").

À la réception du contenu envoyé par le fournisseur 7 ou 8, le portail 1 met en oeuvre un moteur d'interprétation de commandes lui permettant d'identifier les commandes insérées par le fournisseur 7 ou 8 au sein du contenu. Le portail 1 associe aux commandes XML reconnues au sein du contenu par le moteur d'interprétation une ou plusieurs requêtes destinées à des moyens de ressources complémentaires 9. De telles ressources peuvent être des serveurs "internes" ou "externes" au portail 1.

Plus précisément, de telles ressources complémentaires 9 peuvent être des ressources co-localisées au portail, par exemple supportées par un serveur connecté au même réseau local que le portail 1, ou des ressources externes disponibles de manière générale sur le réseau mondial Internet.

Selon un mode de réalisation particulier de l'invention, le portail 1 communique avec les ressources complémentaires 9 co-localisées au portail 1, en mettant en oeuvre un protocole de communication du type TCP/IP (en anglais "Transmission Control Protocol/Internet Protocol") et des mécanismes d'encapsulation de messages de type XML.

Lorsque les ressources complémentaires 9 sont des ressources externes disponibles sur le réseau mondial Internet, le portail 1 communique avec de telles ressources complémentaires 9 en mettant en oeuvre un protocole de communication du type HTTP (en anglais "Hyper Text Transfer Protocol").

De telles ressources complémentaires 9 comprennent par exemple un serveur 10 de création dynamique de cartes géographiques, un serveur 11 de géo-codage, un serveur 12 de localisation, et un moteur de recherche 13.

L'architecture du système de communication présenté en figure 1 permet d'obtenir une plate-forme 1 de services indépendante des ressources 9 qu'elle commande. Ainsi, il est possible de modifier l'implémentation technologique de l'une des ressources 9 de manière transparente pour les fournisseurs de contenu 7 et 8 et pour les utilisateurs du réseau de communication considéré. Ceci est particulièrement avantageux pour les outils multimédia liés à l'Internet mobile, dont les technologies évoluent très rapidement.

Par exemple, l'ajout de nouvelles fonctions de représentation cartographique au sein du serveur 10 de création dynamique de cartes géographiques peut se faire de manière très simple, en installant un serveur 10 supportant cette nouvelle technologie, et en augmentant la DTD (en anglais "Document Type Definition") XML des commandes XML de génération de cartes, dans le cas où la nouvelle technologie considérée introduit de nouvelles fonctions, utilisables par les fournisseurs de contenu 7 et 8, et ne se résume pas à une augmentation de qualité ou de performance de fonctions déjà existantes.

Les ressources 9 délivrent ensuite des informations complémentaires, en réponse aux commandes reçues du portail 1, qui sont intégrées au contenu, produit par le fournisseur de contenu 7 ou 8, par le portail 1, puis envoyées au terminal 2, 3, 4 ou 20 ayant émis une requête. Bien que l'intégration de ces informations complémentaires soit effectuée par le portail 1, le fournisseur de contenu 7 ou 8 dispose cependant de moyens lui permettant de contrôler entièrement ce traitement.

On peut également envisager que l'intégration des informations complémentaires au contenu soit mise en oeuvre par le fournisseur de contenu 7 ou 8 lui-même.

Une telle architecture illustrée en figure 1 permet ainsi de mettre en oeuvre une médiation de services, en permettant d'obtenir un modèle de services en couches, une première couche étant constituée des ressources complémentaires 9 du type services d'annuaire, services de recherche ou services de routage par exemple, et une deuxième couche étant constituée de services thématiques proposés par les fournisseurs de contenu 7 ou 8.

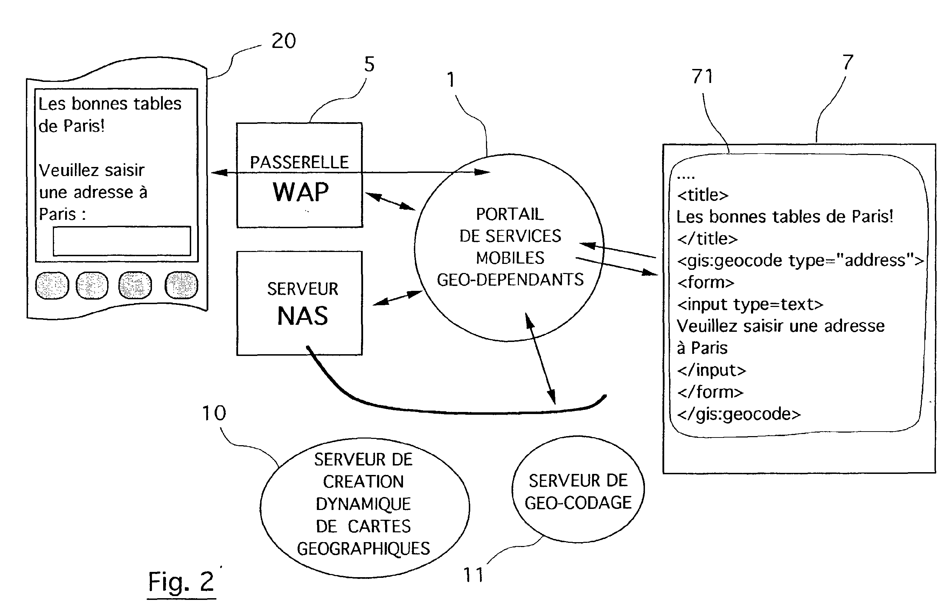

On présente désormais, en relation avec les figures 2 à 4, un exemple de mise en oeuvre du système de la figure 1 en réponse à une requête d'un terminal, destinée à un site fournisseur de contenu.

Selon le mode de réalisation particulier illustré en figure 2, un utilisateur accède au réseau mondial Internet à l'aide de son terminal 20 de type PDA par l'intermédiaire d'une passerelle WAP 5. Il émet une requête à destination d'un site fournisseur de contenu 7, répertoriant par exemple les adresses de bons restaurants parisiens.

Le fournisseur de contenu 7 envoie, par l'intermédiaire du portail 1, un contenu 71 exprimé selon un langage de description avec marqueurs, qui s'affiche sur l'écran du terminal 20 de l'utilisateur, l'invitant à saisir une position géographique, à proximité de laquelle il cherche un restaurant.

Le fournisseur de contenu 7 insère en outre dans le contenu 71 des commandes destinées au serveur 11 de géo-codage. À la réception du contenu 71, le moteur d'interprétation de commandes du portail 1 identifie ces commandes au sein du contenu 71, et émet une requête à destination du serveur 11 de géo-codage. L'adresse saisie par l'utilisateur est ainsi transformée par le serveur 11 de géo-codage en coordonnées géographiques, qui sont ensuite utilisées par le fournisseur de contenu 7 pour déterminer le restaurant le plus proche de l'adresse indiquée par l'utilisateur.

Selon une variante de réalisation non illustrée, le fournisseur de contenu 7 émet une commande à destination d'un serveur de localisation, qui détermine la position géographique de l'utilisateur, sans que ce dernier n'ait à la communiquer au fournisseur de contenu 7. Le terminal de l'utilisateur étant connecté à un réseau de radiocommunication, la position géographique de l'utilisateur peut être déterminée directement en interrogeant le terminal ou la station de base dont il dépend. L'information recueillie est alors une indication de la cellule, ou d'un secteur de la cellule dans lequel se trouve le terminal.

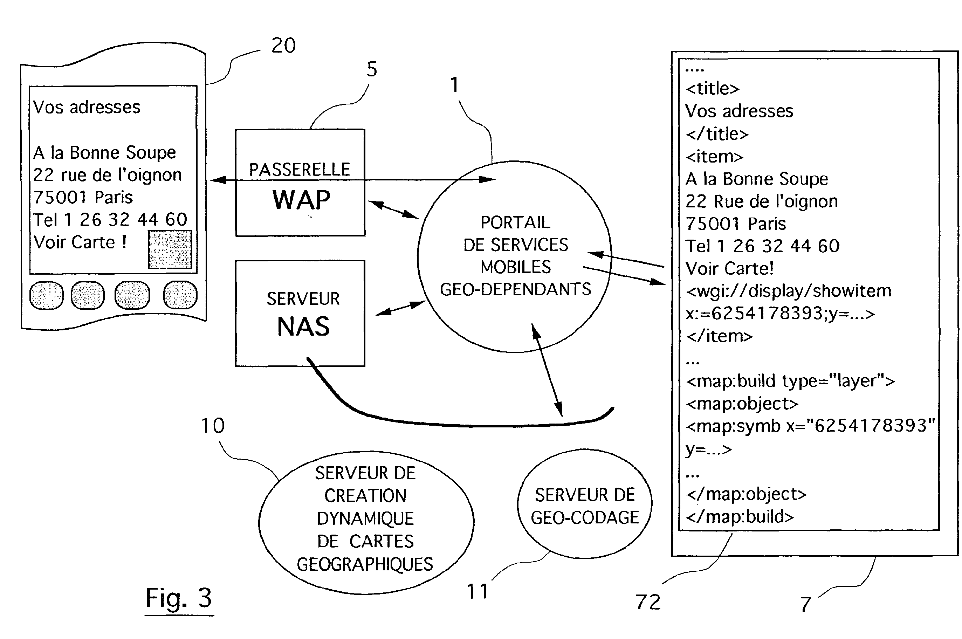

Sur la figure 3, après avoir identifié un ou plusieurs restaurants répondant à la requête de l'utilisateur, le fournisseur de contenu 7 envoie au portail 1 un nouveau contenu 72, comprenant l'adresse du ou des restaurants identifiés, et dans lequel sont insérées des commandes de création d'une carte géographique.

Le portail 1 reçoit le contenu 72, identifie les commandes qui y sont insérées, et émet une requête correspondante de création de carte géographique à destination du serveur 10 de création dynamique de cartes géographiques. Le serveur 10 envoie la carte créée à partir des commandes du fournisseur de contenu 7 au portail 1. Cette carte est ensuite insérée dans le contenu 72, puis émise, par le biais de la passerelle WAP 5, vers le terminal 20 du client, sur l'écran duquel elle s'affiche.

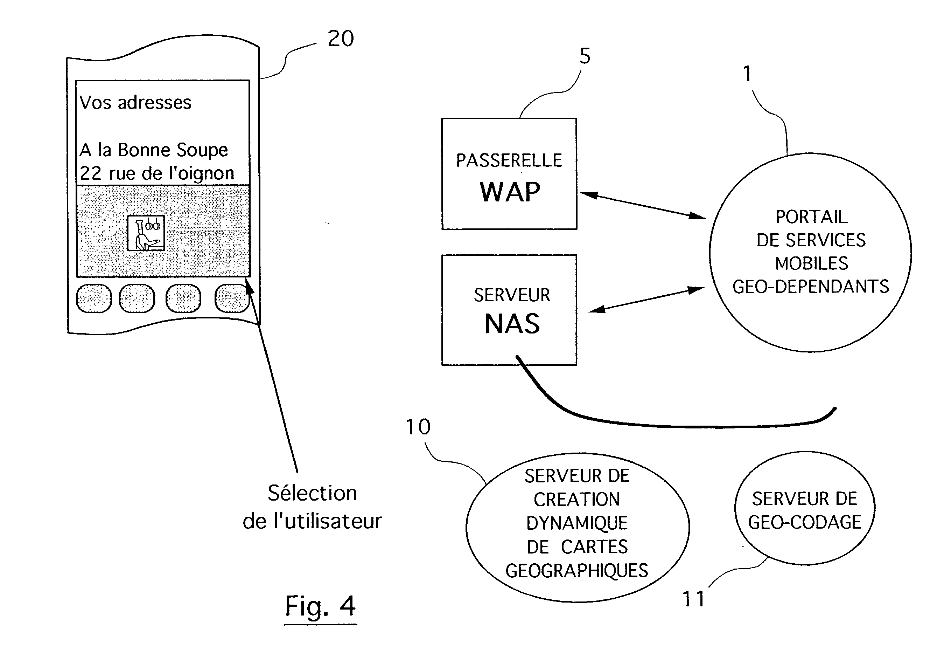

La figure 4 illustre l'utilisation du contenu 72, enrichi de la carte géographique créée par le serveur 10, par l'utilisateur du terminal 20. Une interaction locale est ainsi possible, au niveau du terminal 20, entre le navigateur WAP du client et la visionneuse de carte géographique.

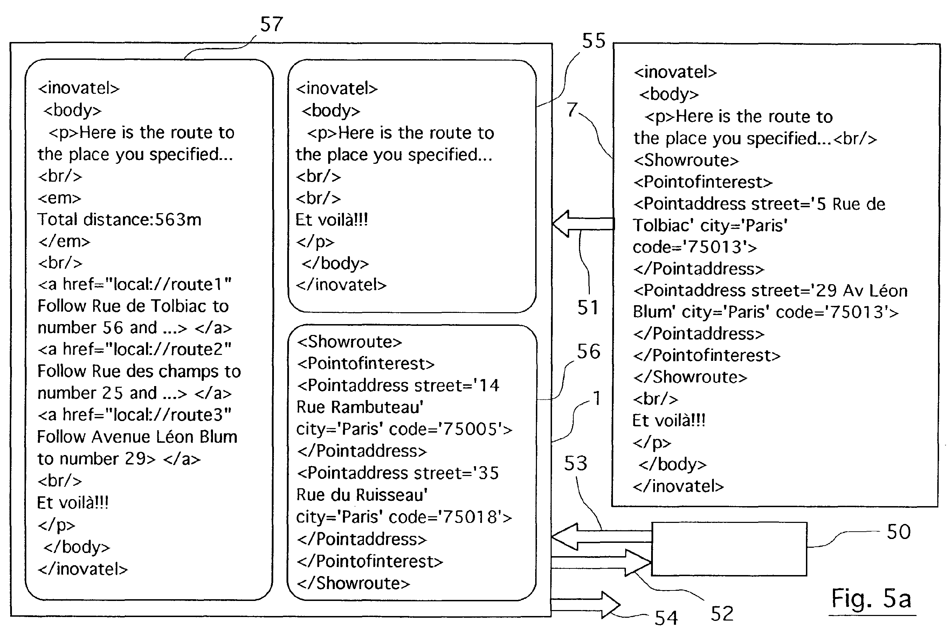

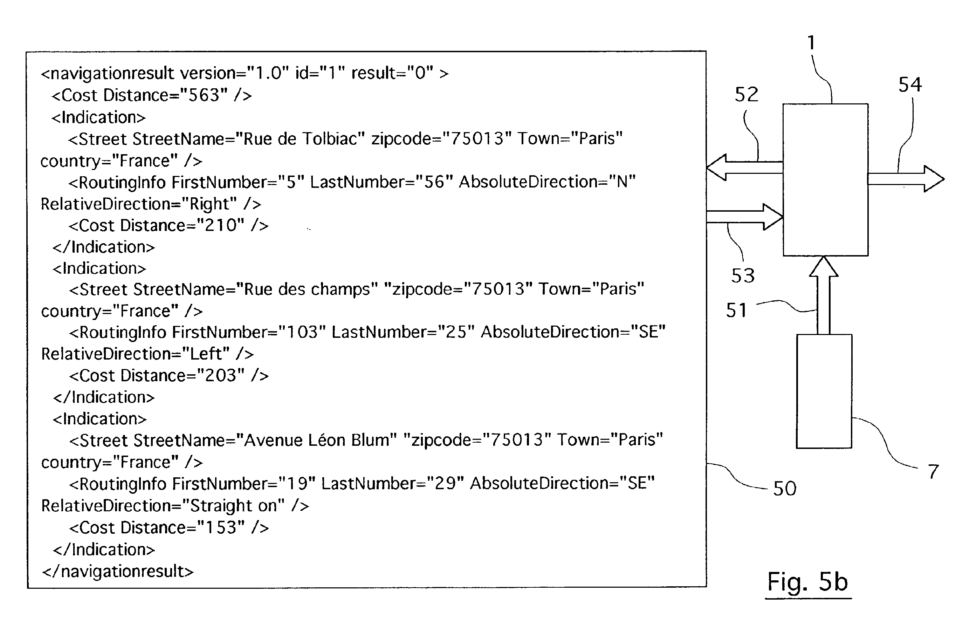

On présente désormais, en relation avec la figure 5, différents modes de réalisation possibles des échanges entre le serveur d'accès selon l'invention, un fournisseur de contenu, et un serveur complémentaire de routage.

Selon un premier mode de réalisation, le fournisseur de contenu produit un contenu exprimé selon un langage de type HTML (en anglais "HyperText Markup Language"), ou WML (en anglais "Wireless Markup Language") pour un contenu destiné à un terminal de type WAP. Des commandes d'enrichissement de contenu sont ajoutées comme commentaires au contenu HTML ou WML, identifiées par le moteur d'interprétation du serveur d'accès selon l'invention, et transformées en requêtes destinées à un ou plusieurs serveurs de ressources complémentaires. Les serveurs de ressources complémentaires génèrent, en réponse à cette requête, un contenu exprimé selon un langage de type XHTML (en anglais "eXtensible Hyper Text Markup Language", qui est un langage normalisé issu du langage HTML, et qui est compatible XML/HTML), qui est ensuite transformé par le portail ou le proxy selon l'invention en contenu HTML ou WML, puis qui est inséré par le portail dans le contenu produit par le fournisseur de contenu, à la place des commandes spécifiées en commentaires.

Selon un deuxième mode de réalisation, illustré en figure 5, le fournisseur de contenu 7 développe son site Web (dans le cas particulier décrit ici où le réseau de télécommunication considéré est le réseau mondial Internet), de façon que le contenu qu'il produit soit exprimé selon un langage de type XHTML). Les commandes destinées aux serveurs de ressources complémentaires sont alors exprimées à l'aide d'un langage de type XML, et ajoutées comme un module XML complémentaire à XHTML, suivant l'approche standard de modularisation du langage XTML.

Dans l'exemple de la figure 5, le fournisseur de contenu 7 envoie (51) au portail 1 une feuille de route, comprenant un contenu textuel exprimé en XHTML et une commande de génération de feuille de route d'une première adresse "5 rue de Tolbiac" à une deuxième adresse "29 avenue Léon Blum". Ce contenu est élaboré dynamiquement par le serveur du fournisseur de contenu 7, par exemple en mettant en oeuvre une technique standard de pages actives, de type ASP (en anglais "Active Server Pages") ou JSP (en anglais "Java Server Pages"), en réponse à une requête HTTP, émise par un utilisateur à destination du site fournisseur de contenu 7, et relayée par le portail 1.

Ce contenu est ensuite analysé par le portail 1, qui isole la commande 56 du contenu 55. Le portail 1 émet alors une requête 52 à destination de la ressource dédiée 50, de façon qu'elle exécute la commande 56. Une telle ressource 50 (qui fait partie des ressources complémentaires 9 illustrées en figure 1) est un serveur du réseau local auquel appartient le portail 1, ou un serveur externe du réseau mondial Internet par exemple. La ressource externe 50 renvoie (53) le résultat de la commande 56 sous un format de type XML, et le portail 1 transforme alors ce résultat en contenu XHTML, selon une règle de transformation connue. Le portail 1 intègre ensuite le contenu fourni par la ressource 50 au contenu d'origine 55, de manière à générer un contenu enrichi 57. La règle de transformation mise en oeuvre par le portail 1 étant connue du fournisseur de contenu 7, ce dernier peut prévoir la forme finale sous laquelle le contenu enrichi 57 apparaît à l'utilisateur.

Le contenu enrichi 57 est ensuite transformé de manière à être exprimé dans un langage de balises compréhensible par le terminal de l'utilisateur, puis envoyé (54) vers ce dernier. Un tel langage de balises peut être, par exemple, un langage de type HTML, c-HTML (en anglais "Compact HTML", version simplifiée du langage HTML développée par NTT Do Co Mo (marque déposée) pour les téléphones portables I-mode), WML ou toute autre variante de HTML adaptée à des clients légers comme les PDA (en anglais "Personal Digital Assistant") ou les téléphones mobiles.

Un troisième mode de réalisation, non illustré en figure 5, repose sur un modèle XSP (en anglais "eXtensible Server Pages", tel que proposé par le groupe de travail Cocoon d'édition et de présentation de documents XML du consortium Apache (marque déposée)) permettant de combiner un langage de type XML avec un langage interprétable, par exemple Java (marque déposée). Le fournisseur de contenu envoie donc, en réponse à une requête d'un utilisateur, un contenu exprimé selon un langage de type XML, accompagné de commandes publiées sous la forme de classes Java. Le code Java (ou tout autre code exprimé selon un langage interprétable) inséré dans le contenu permet en outre d'assembler le résultat des commandes, fourni par un serveur de ressources complémentaires, au contenu d'origine, de manière dynamique et ouverte.

Par exemple, si le contenu produit par le fournisseur de contenu est une feuille de route, ce dernier peut choisir, pour construire la réponse à la requête initiale de l'utilisateur, de n'intégrer dans le contenu d'origine qu'un sous-ensemble de l'information retournée. Le fournisseur de contenu peut aussi choisir de changer l'ordre des informations fournies par le serveur de ressources complémentaires, en fonction par exemple de paramètres relatifs au profil de l'utilisateur ayant émis une requête.

Le document XML correspondant au contenu enrichi est ensuite transformé, de manière à être exprimé selon un langage de balises compréhensible par le terminal de l'utilisateur ayant émis la requête.

L'invention a été plus particulièrement décrite, à travers les exemples ci-dessus, en référence à l'utilisation de ressources complémentaires permettant de générer des informations et/ou des services de type géo-dépendant.

L'invention s'applique bien sûr également à tout autre type de ressource complémentaire, délivrant tout autre type d'information et/ou de service permettant d'enrichir un contenu produit par un fournisseur de contenu.

Ainsi, on peut par exemple envisager qu'un utilisateur émette une requête à destination d'un site proposant des suggestions d'activités ou de loisirs à pratiquer ou à découvrir. Il est alors intéressant, pour le fournisseur de contenu, d'émettre une commande à destination d'un serveur météorologique, de manière à tenir compte des prévisions climatiques dans la construction de sa réponse à l'utilisateur.

L'utilisateur reçoit ainsi une liste de loisirs à découvrir au cours du week-end par exemple, accompagnés de conseils l'invitant plus particulièrement à choisir des activités d'intérieur en cas de météo défavorable.

On peut aussi envisager que le fournisseur de contenu fasse conjointement appel aux ressources d'un serveur de routage et d'un serveur météorologique, de manière à proposer à un utilisateur un itinéraire adapté aux conditions climatiques, pour se rendre par exemple au musée qu'il propose de visiter. On peut ainsi imaginer qu'en cas de verglas ou d'importantes chutes de neige, l'utilisateur reçoit, outre l'adresse d'un musée intéressant, un itinéraire pour s'y rendre privilégiant d'emprunter de grands axes de circulation, susceptibles d'être dégagés plus rapidement.

## Revendications

1. Serveur (1) d'accès à des services, du type permettant l'interconnexion entre une pluralité de terminaux (2, 3, 4) et une pluralité de sites fournisseurs de contenu (7, 8), via un réseau de télécommunication,
**caractérisé en ce qu'**il met à la disposition desdits sites fournisseurs des moyens de ressources complémentaires (9) délivrant, sur commande d'un desdits sites fournisseurs, des informations permettant de construire une réponse à une requête d'un desdits terminaux, et **en ce que** ledit serveur d'accès appartient au groupe comprenant les portails et les proxys.

2. Serveur d'accès selon la revendication 1, **caractérisé en ce qu'**au moins un desdits moyens de ressources complémentaires (9) est conçu de façon à délivrer des informations tenant compte de la position géographique dudit terminal ayant émis une requête et/ou d'une position géographique indiquée par ledit terminal.

3. Serveur d'accès selon l'une quelconque des revendications 1 et 2, **caractérisé en ce qu'**il comprend des moyens d'intégration desdites informations à un contenu fourni par ledit site fournisseur, de manière à construire ladite réponse.

4. Serveur d'accès selon l'une quelconque des revendications 1 et 2, **caractérisé en ce que** lesdites informations sont envoyées audit site fournisseur ayant formulé une commande, ledit site fournisseur intégrant au moins certaines desdites informations à un contenu qu'il produit, de manière à construire ladite réponse.

5. Serveur d'accès selon l'une quelconque des revendications 1 à 4, **caractérisé en ce qu'**il comprend un moteur d'interprétation desdites commandes, permettant d'identifier lesdites commandes au sein d'un contenu fourni par un desdits sites fournisseurs audit serveur et/ou de traduire lesdites commandes en requêtes destinées à au moins l'un desdits moyens de ressources complémentaires.

6. Serveur d'accès selon l'une quelconque des revendications 1 à 5, **caractérisé en ce que** ledit contenu est exprimé selon au moins un langage de description avec marqueurs.

7. Serveur d'accès selon la revendication 6, **caractérisé en ce que** ledit langage de description avec marqueurs appartient au groupe comprenant :
- un langage de type XML (en anglais "Extended Markup Language") ;
- un langage de type HTML (en anglais "HyperText Markup Language") ;
- un langage de type WML (en anglais "Wireless Markup Language") ;
- un langage de type XHTML (en anglais "eXtensible Hyper Text Markup Language").

8. Serveur d'accès selon l'une quelconque des revendications 1 à 7, **caractérisé en ce que** lesdites commandes sont exprimées selon un langage appartenant au groupe comprenant :
- un langage de type HTML ;
- un langage de type WML ;
- un langage de type XHTML ;
- un langage interprétable, par exemple de type Java (marque déposée).

9. Serveur d'accès selon l'une quelconque des revendications 1 à 10, **caractérisé en ce qu'**il comprend un moteur de mise en forme d'un contenu, fourni par ledit site fournisseur, de manière à pouvoir formuler ladite réponse sous un format final, fonction du type dudit terminal ayant émis ladite requête.

10. Serveur d'accès selon l'une quelconque des revendications 1 à 9, **caractérisé en ce qu'**il comprend des moyens de traduction d'adresse réticulaire (en anglais URL, "Uniform Resource Locator"), permettant de traduire au moins un lien présent dans un contenu fourni par ledit site fournisseur en un lien local audit serveur d'accès, de manière à ce qu'une requête ultérieure dudit terminal à ladite adresse réticulaire passe par ledit serveur d'accès.

11. Serveur d'accès selon l'une quelconque des revendications 1 à 10, **caractérisé en ce qu'**il comprend des moyens de gestion de session.

12. Serveur d'accès selon l'une quelconque des revendications 1 à 11, **caractérisé en ce que** l'un au moins desdits moyens de ressources complémentaires appartient au groupe comprenant :
- un serveur de localisation (12), permettant de déterminer la position géographique dudit terminal ayant émis ladite requête ;
- un serveur (10) de création dynamique de cartes géographiques, permettant d'associer des marqueurs liés à un contenu fourni par ledit site fournisseur audit terminal à leur position sur ladite carte créée ;
- un serveur de gestion de calendriers ;
- un serveur de routage dynamique ;
- un serveur (11) de géocodage ;
- un serveur de fourniture d'annuaire ;
- un serveur de contrôle de services de téléphonie ;
- un moteur de recherche (13) ;
- un serveur de publicité localisée.

13. Site fournisseur de contenu (7) auquel une pluralité de terminaux peut accéder par l'intermédiaire d'un serveur d'accès à des services, via un réseau de télécommunication,
**caractérisé en ce qu'**il comprend des moyens d'émission d'au moins une commande (56) à destination dudit serveur d'accès (1) à des services, de manière que ledit serveur d'accès mette à la disposition dudit site fournisseur des moyens de ressources complémentaires (50, 9) délivrant des informations permettant de construire une réponse à une requête d'un desdits terminaux, ledit serveur d'accès appartenant au groupe comprenant les portails et les proxys.

14. Site fournisseur de contenu selon la revendication 13, **caractérisé en ce qu'**il comprend des moyens d'intégration desdites informations délivrées par lesdits moyens de ressources complémentaires à un contenu (55) qu'il produit, de manière à construire ladite réponse.

15. Procédé de fourniture d'un service par un site prédéterminé d'une pluralité de sites fournisseurs de contenu, en réponse à une requête d'un terminal prédéterminé d'une pluralité de terminaux,
un serveur d'accès à des services permettant l'interconnexion entre ladite pluralité de sites fournisseurs de contenu et ladite pluralité de terminaux, via un réseau de télécommunication,
**caractérisé en ce qu'**il comprend une étape au cours de laquelle ledit serveur met à la disposition dudit site fournisseur des moyens de ressources complémentaires délivrant, sur commande dudit site fournisseur, des informations permettant de construire une réponse à une requête d'un desdits terminaux, ledit serveur d'accès appartenant au groupe comprenant les portails et les proxys.
